# EUROPEAN PATENT APPLICATION

(11) **EP 4 478 495 A1**
(43) Date of publication of application: **18.12.2024**
(21) Application number: 24158704.7
(22) Date of filing: 20.02.2024
(51) Int. Cl.: H01M 50/147, H01M 50/176, H01M 50/528, H01M 50/533, H01M 50/536, H01M 50/538, H01M 50/553, H01M 50/562, H01M 50/566

(54) **SECONDARY BATTERY**

(30) Priority: 16.06.2023 KR 20230077245
(71) Applicant: Samsung SDI Co., Ltd., Yongin-si, Gyeonggi-do 17084 (KR)
(72) Inventor: Kim, Kee Yun, 17084 Gyeonggi-do (KR)
(74) Representative: Gulde & Partner

(57) **Abstract**

A secondary battery (100) includes: an electrode assembly (110) including a first electrode tab and a second electrode tab exposed at opposite sides, respectively; a case (160) accommodating the electrode assembly (110) and open on opposite sides; a first cap plate (171) that seals a first side opening of the case (160); a first current collector (120) that is in contact with and coupled to the first electrode tab exposed at a first side of the electrode assembly (110), the first current collector (120) including a coupling hole (122a); and a first terminal (130) including a coupling protrusion (131b, 151b) inserted and coupled to the coupling hole (122a) of the first current collector (120), the first terminal (130) including a portion exposed to an outside of the first cap plate (171), and an outer diameter (B) of an end of the coupling protrusion (131b, 151b) is larger than outer diameters (A) of other regions thereof.

## Description

### BACKGROUND

### 1. Field

Aspects of embodiments of the present disclosure relate to a secondary battery.

### 2. Description of the Related Art

A secondary battery is a power storage system that provides excellent energy density capable of converting electrical energy into chemical energy and storing the same. Compared to non-rechargeable primary batteries, secondary batteries are rechargeable and are widely used in IT devices such as smartphones, cellular phones, notebooks, and tablet PCs. Recently, interest in electric vehicles has increased to prevent or reduce environmental pollution, and, accordingly, high-capacity secondary batteries are being adopted for electric vehicles. These secondary batteries are desired to have characteristics such as high density, high power, and stability.

The above information disclosed in this Background section is provided for enhancement of understanding of the background of the invention and, therefore, it may contain information that does not constitute prior art.

### SUMMARY

According to an aspect of embodiments of the present disclosure, a secondary battery is capable of preventing or substantially preventing the generation of foreign substances and damage due to welding because a current collector and a terminal are coupled by riveting.

According to one or more embodiments, a secondary battery includes: an electrode assembly including a first electrode tab and a second electrode tab exposed at opposite sides, respectively; a case accommodating the electrode assembly and open on opposite sides; a first cap plate that seals a first side opening of the case; a first current collector that is in contact with and coupled to the first electrode tab exposed at a first side of the electrode assembly, the first current collector including a coupling hole; and a first terminal including a coupling protrusion inserted and coupled to the coupling hole of the first current collector, the first terminal including a portion exposed to an outside of the first cap plate, and an outer diameter of an end of the coupling protrusion is larger than outer diameters of other regions thereof.

The first current collector may include: a first electrode connection portion that may be in contact with and coupled to the first electrode tab exposed at the first side of the electrode assembly; and a first terminal connection portion including a first end that may be coupled to the first electrode connection portion by welding, and the coupling hole at a second end may to be coupled to the coupling protrusion of the first terminal.

The first terminal connection portion may be bent at least once between a first end and a second end thereof and may be located between the first electrode tab and the first terminal of the electrode assembly.

The coupling protrusion of the first terminal may be inserted into the coupling hole of the first current collector, and an end of the coupling protrusion may be spread by riveting and coupled to the first current collector.

The first electrode connection portion may include a metal plate extending along a first direction, and may include a first connection portion welded in contact with the first side of the electrode assembly, and a first center portion that may be bent from the first connection portion, may protrude in a direction of the first cap plate relative to the first connection portion, and may be spaced apart from the first side of the electrode assembly.

The first connection portion may be located on opposite sides of the first center portion in the first direction.

The first terminal may include: a first inner terminal plate located inside the first cap plate; a first outer terminal plate located outside the first cap plate; and a first terminal pillar that may be coupled to the first inner terminal plate on the inside of the first cap plate, may penetrate the first cap plate and may be coupled to the first outer terminal plate and the outside of the first cap plate.

The first inner terminal plate may include the coupling protrusion on the inside thereof.

The coupling protrusion may protrude in a second direction, which may be a direction in which the electrode assembly extends.

The first inner terminal plate may include a terminal hole penetrating a first side and a second side thereof at a center of the first inner terminal plate, and the coupling protrusion may be located on opposite sides of the terminal hole in the first direction.

The coupling hole may be at a location corresponding to the coupling protrusion and may have a size corresponding to a diameter of the coupling protrusion.

The secondary battery may further include: a first inner insulation member between the first cap plate and the first inner terminal plate; a first outer insulation member between the first cap plate and the first outer terminal plate; and a first seal gasket between the first cap plate and the first terminal pillar.

The secondary battery may further include: a second cap plate that seals a second side opening of the case; a second current collector that may be in contact with and coupled to a second electrode tab exposed on a second side of the electrode assembly and may have a coupling hole; and a second terminal that may have a coupling protrusion inserted and riveted to the coupling hole of the second current collector, and a portion may be exposed to an outside of the second cap plate.

The coupling protrusion may include a circular ring-shaped protrusion with a hollow interior.

The secondary battery may further include a first insulation member between the first cap plate and the electrode assembly to block electrical contact.

All embodiments described in this specification may be advantageously combined with one another to the extent that their respective features are compatible. In particular, the expressions "according to an embodiment," "in an embodiment," "an embodiment of the invention provides" etc. mean that the respective features may or may not be part of specific embodiments of the present invention.

### BRIEF DESCRIPTION OF DRAWINGS

FIG. 1 is a perspective view of a secondary battery according to an embodiment of the present disclosure.
FIG. 2 is a cross-sectional view taken along the line 2-2' of the secondary battery of FIG. 1.
FIG. 3 is a perspective view showing a first cap plate and a second cap plate before being coupled to a case.
FIG. 4 is a perspective view showing a configuration in which first and second current collectors are coupled to an electrode assembly of the secondary battery of FIG. 1.
FIGS. 5A, 5B, and 5C are a perspective view showing the first current collector and a first inner terminal plate of a first terminal before being coupled, a perspective view showing the first inner terminal plate after being coupled, and a cross-sectional view showing the first inner terminal plate after being coupled, respectively.

### DETAILED DESCRIPTION

Herein, some embodiments of the present disclosure will be described in further detail with reference to the accompanying drawings.

Example embodiments of the present disclosure are provided to more completely explain the present disclosure to those skilled in the art; however, the following examples may be modified in various other forms. The present disclosure may be embodied in many different forms and should not be construed as being limited to the example embodiments set forth herein. Rather, these example embodiments are provided so that this disclosure will be thorough and complete and will convey the aspects and features of the present disclosure to those skilled in the art.

In addition, in the accompanying drawings, sizes or thicknesses of various components may be exaggerated for brevity and clarity. Like numbers refer to like elements throughout. As used herein, the term "and/or" includes any and all combinations of one or more of the associated listed items. In addition, it is to be understood that when an element A is referred to as being "connected to" an element B, the element A may be directly connected to the element B or one or more intervening elements C may be present therebetween such that the element A and the element B are indirectly connected to each other.

The terminology used herein is for the purpose of describing particular embodiments and is not intended to be limiting of the disclosure. As used herein, the singular forms are intended to include the plural forms as well, unless the context clearly indicates otherwise. It is to be further understood that the terms "comprise" and/or "comprising," when used in this specification, specify the presence of stated features, numbers, steps, operations, elements, and/or components, but do not preclude the presence or addition of one or more other features, numbers, steps, operations, elements, components, and/or groups thereof.

It is to be understood that, although the terms "first," "second," etc. may be used herein to describe various members, elements, regions, layers, and/or sections, these members, elements, regions, layers, and/or sections are not to be limited by these terms. These terms are used to distinguish one member, element, region, layer, and/or section from another. Thus, for example, a first member, a first element, a first region, a first layer, and/or a first section discussed below could be termed a second member, a second element, a second region, a second layer, and/or a second section without departing from the teachings of the present disclosure.

Spatially relative terms, such as "beneath," "below," "lower," "above," "upper," and the like, may be used herein for ease of description to describe one element or feature's relationship to another element(s) or feature(s), referring to the figures. It is to be understood that the spatially relative terms are intended to encompass different orientations of the device in use or operation in addition to the orientation depicted in the figures. For example, if the element or feature in the figures is turned over, elements described as "below" or "beneath" other elements or features would be oriented "on" or "above" the other elements or features. Thus, the example term "below" can encompass both an orientation of above and below.

Unless otherwise defined, all terms (including technical and scientific terms) used herein have the same meaning as commonly understood by one of ordinary skill in the art to which the inventive concept pertains. It is also to be understood that terms defined in commonly used dictionaries should be interpreted as having meanings consistent with the meanings in the context of the related art, and are expressly defined herein unless they are interpreted in an ideal or overly formal sense.

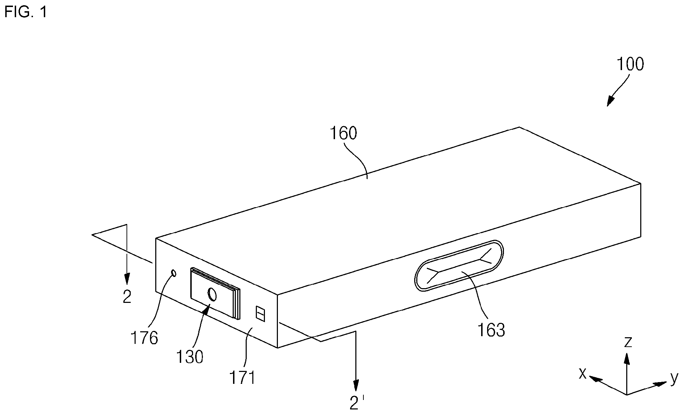

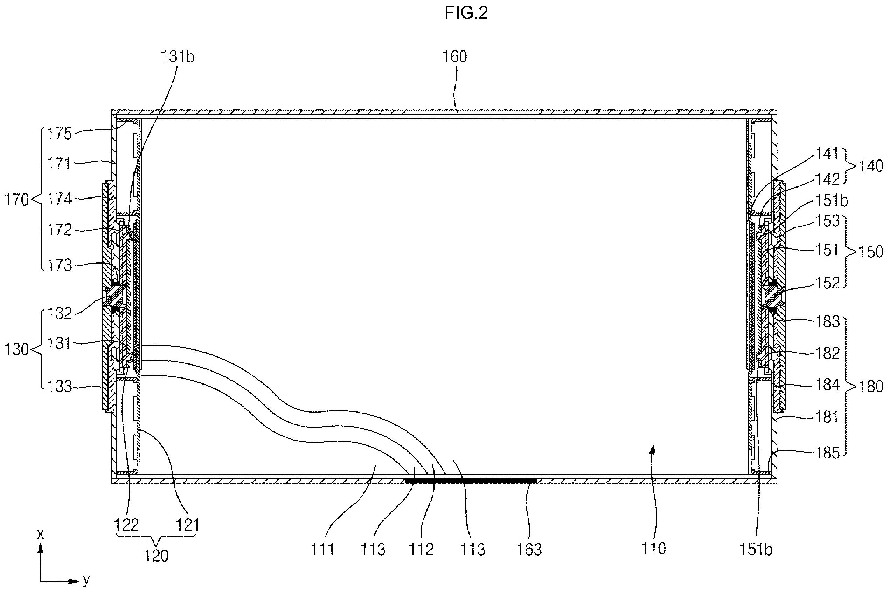

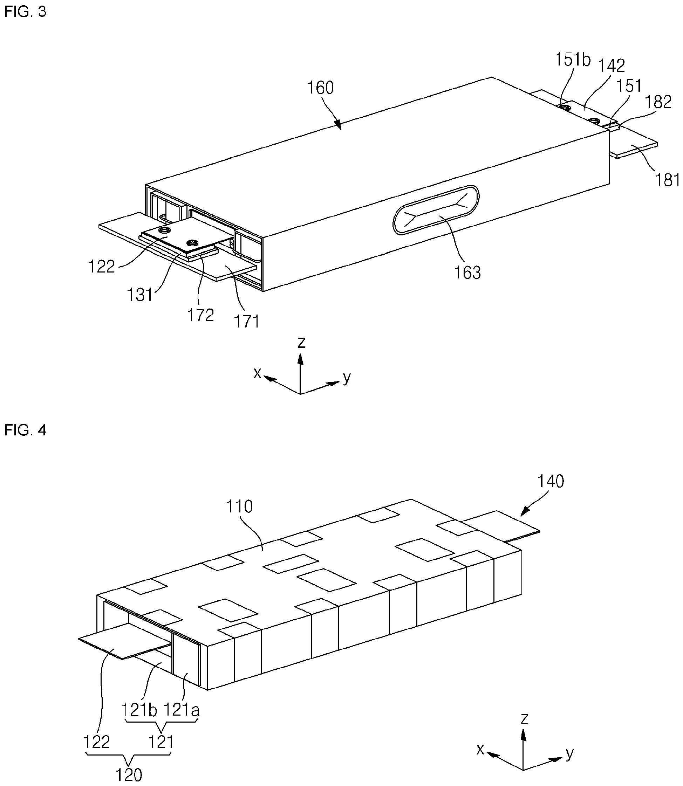

Referring to FIG. 1, a perspective view of a secondary battery according to an embodiment of the present disclosure is shown. Referring to FIG. 2, a cross-sectional view taken along the line 2-2' of the secondary battery of FIG. 1 is shown. Referring to FIG. 3, a perspective view showing a first cap plate and a second cap plate before being coupled to a case is shown. Herein, description of a secondary battery 100 of the present disclosure will be made with respect to the structure thereof on the basis of the secondary battery 100 shown in FIG. 1.

In an embodiment, the secondary battery 100 may include an electrode assembly 110, a first current collector 120, a first terminal 130, a second current collector 140, a second terminal 150, a case 160, a first cap assembly 170, and a second cap assembly 180.

The electrode assembly 110 may be formed by winding or stacking a laminate of a first electrode plate 111, a separator 113, and a second electrode plate 112, which are formed in the shape of a thin plate or film. In an embodiment, the electrode assembly 110 is a wound laminate, and the winding axis may be parallel to a longitudinal direction (y) of the case 160. In another embodiment, the electrode assembly 110 may be of a stack type, rather than a wound type, but the present disclosure does not limit the shape of the electrode assembly 110. In addition, the electrode assembly 110 may be accommodated inside the case 160 by stacking one or more electrode assemblies 110 such that the long sides are adjacent to each other, but the present disclosure does not limit the number of electrode assemblies 110.

In an embodiment, the first electrode plate 111 of the electrode assembly 110 may be a negative electrode, and the second electrode plate 112 may be a positive electrode. Of course, the opposite is also possible.

The first electrode plate 111 is formed by applying a first electrode active material, such as graphite or carbon, to a first electrode current collector formed of a metal foil, such as copper, a copper alloy, nickel, or a nickel alloy, and may include a first electrode tab (or a first uncoated portion), which is a region to which the first electrode active material is not applied. The first electrode tab may be a passage for current flow between the first electrode plate 111 and the first current collector 120. In some examples, the first electrode tab may be formed by cutting the first electrode plate 111 so as to protrude at a first side in advance when manufacturing the first electrode plate 111, and may protrude further at the first side than the separator 113 without a separate cutting process.

The second electrode plate 112 is formed by applying a second electrode active material, such as a transition metal oxide, to a second electrode current collector formed of a metal foil, such as aluminum or an aluminum alloy, and may include a second electrode tab (or second uncoated portion), which is a region to which the second electrode active material is not applied. The second electrode tab may be a passage for current flow between the second electrode plate 112 and the second current collector 140. In some examples, the second electrode tab may be formed by cutting the second electrode plate 112 so as to protrude at a second side in advance when manufacturing the second electrode plate 112, and may protrude further at the second side than the separator 113 without a separate cutting process.

In some examples, the first electrode tab may be located at a short left side of the electrode assembly 110, and the second electrode tab may be located at a short right side of the electrode assembly 110. Here, the left and right sides are provided for convenience of explanation based on the secondary battery 100 shown in FIGS. 1 and 2, and the location may change when the secondary battery 100 is rotated left and right or up and down.

In some examples, the separator 113 is located between the first electrode plate 111 and the second electrode plate 112 and prevents or substantially prevents a short circuit and enables the movement of lithium ions, and, in an embodiment, may include polyethylene, polypropylene, or a composite film of polyethylene and polypropylene. In an embodiment, the separator 113 may be replaced with an inorganic solid electrolyte, such as a sulfide-based, oxide-based, or phosphate-based electrolyte that does not require a liquid or gel electrolyte.

The first electrode tab of the first electrode plate 111 and the second electrode tab of the second electrode plate 112 are located at both, or opposite, ends of the electrode assembly 110. In some examples, the electrode assembly 110 may be accommodated in the case 160 together with an electrolyte. In some examples, the electrolyte may include a lithium salt, such as LiPF₆ or LiBF₄ in an organic solvent, such as EC, PC, DEC, EMC, or DMC. In an embodiment, the electrolyte may be in a liquid or gel phase. In some examples, when an inorganic solid electrolyte is used, the electrolyte may be omitted.

In an embodiment, in the electrode assembly 110, the first current collector 120 and the second current collector 140 are located by being welded and connected to the first electrode tab of the first electrode plate 111 and the second electrode tab of the second electrode plate 112 exposed to both sides thereof, respectively.

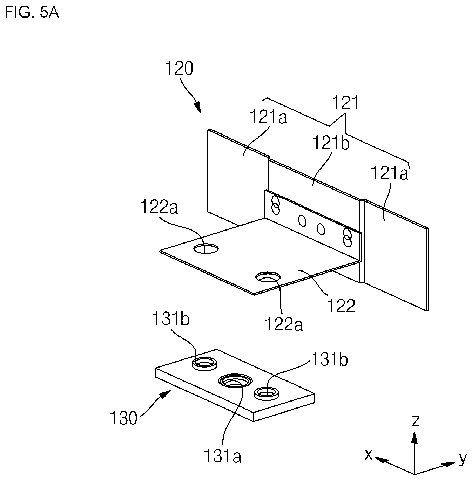

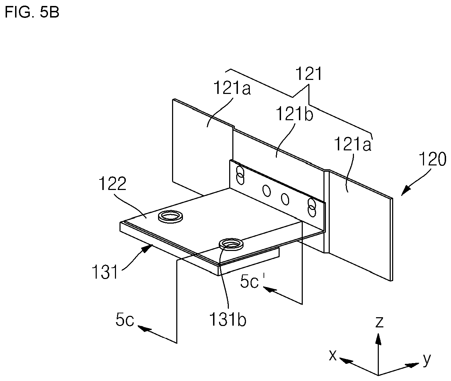

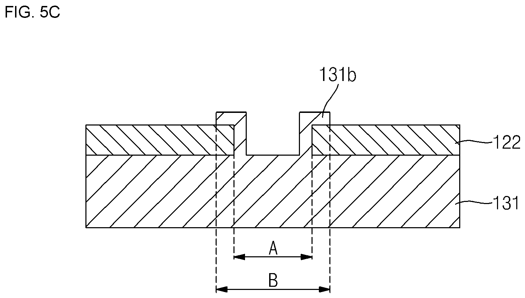

The first current collector 120 is made of metal and can electrically connect the first electrode plate 111 and the first terminal 130. Referring to FIG. 4, a perspective view showing the first current collector 120 and the second current collector 140 coupled to the electrode assembly 110 is shown. In addition, referring to FIG. 5A, a perspective view showing the first current collector 120 and a first inner terminal plate 131 of the first terminal 130 before being coupled is shown. Referring to FIG. 5B, a perspective view showing the first current collector 120 and the first inner terminal plate 131 of the first terminal 130 after being coupled is shown. In addition, referring to FIG. 5C, a cross-sectional view taken along the line 5c-5c' of FIG. 5B is shown.

Herein, a structure and coupling relationship of the first current collector 120 will be described with reference to FIGS. 4, 5A, 5B, and 5C.

The first current collector 120 may include a first electrode connection portion 121 that is in contact with and coupled to the first electrode tab (non-coated portion) of the first electrode plate 111 and a first terminal connection portion 122 that is in contact with and coupled to the first terminal 130. In an embodiment, the first current collector 120 may be made of copper or a copper alloy.

The first electrode connection portion 121 extends along a first direction (x), which is a longitudinal direction of a first cap plate 171, which is at a first side of the electrode assembly 110, and may be approximately plate-shaped. In an embodiment, the first electrode connection portion 121 is coupled through welding in a state of being in contact with a first end of the electrode assembly 110, and may have a first polarity, like the first electrode plate 111. Herein, for convenience of explanation, in the first electrode connection portion 121, a surface facing the first side of the electrode assembly 110 will be referred to as an inner surface, and a surface facing the first cap plate 171, which will be described below, will be referred to as an outer surface.

The first electrode connection portion 121 may be approximately plate-shaped and may include a first connection portion 121a provided at both sides of a first center portion 121b in the first direction (x).

The first connection portion 121a may be coupled to the first electrode plate 111 by welding in a state in which the inner surface is in contact with the first side of the electrode assembly 110. In an embodiment, the first connection portion 121a may be recessed in a direction toward the electrode assembly 110, compared to the first center portion 121b. Through this structure, the first connection portion 121a may easily contact the uncoated portion of the first electrode plate 111, and, thus, welding can be easily achieved.

Compared to the first connection portion 121a, the first center portion 121b may protrude in an outward direction in which the first cap plate 171 is located. The first center portion 121b may be spaced apart from one side of the electrode assembly 110. In an embodiment, the first center portion 121b may be joined to an outer surface of the first terminal connection portion 122 by welding.

In an embodiment, the first terminal connection portion 122 is a metal plate, which can be easily bent, and an end thereof may be coupled to the first center portion 121b of the first electrode connection portion 121 by welding. The first terminal connection portion 122 may extend along the second direction (y). The first terminal connection portion 122 is bent after being coupled to the first terminal 130, is accommodated inside the case 160, and may be interposed between the first inner terminal plate 131 of the first terminal 130 and the electrode assembly 110. In an embodiment, the first terminal connection portion 122 may be bent at least once between a first end and a second end.

The second end of the first terminal connection portion 122 may be riveted to the first inner terminal plate 131 of the first terminal 130. The first terminal connection portion 122 may have a coupling hole 122a penetrating between a first side and a second side. The coupling hole 122a may be provided at the second end of the first terminal connection portion 122. In an embodiment, two coupling holes 122a may be provided to be symmetrical with each other with respect to the center of the first terminal connection portion 122 in the first direction (x). The coupling hole 122a may be sized to correspond to the diameter of the coupling protrusion 131b of the first terminal 130.

In an embodiment, the first terminal 130 is made of metal and may be in contact with and riveted to the first terminal connection portion 122 of the first current collector 120 to be electrically connected thereto. In some examples, the first terminal 130 may include a first inner terminal plate 131, a first terminal pillar 132, and a first outer terminal plate 133. In an embodiment, the first terminal 130 may be made of a same metal as the first current collector 120.

The first inner terminal plate 131 may be located at an inside of the first cap plate 171, and the first outer terminal plate 133 may be located at an outside of the first cap plate 171. In addition, the first terminal pillar 132 may penetrate the first cap plate 171, may be coupled to the first outer terminal plate 133 on the outside of the first cap plate 171, and may be coupled to the first inner terminal plate 131 on the inside of the first cap plate 171.

A first inner insulation member 172 may be further interposed between the first inner terminal plate 131 and the first cap plate 171, and a first outer insulation member 174 may be further interposed between the first outer terminal plate 133 and the first cap plate 171. In addition, a first seal gasket 173 may be further interposed between the first terminal pillar 132 and the first cap plate 171 to seal the first terminal 130 and the first cap plate 171 to each other.

The first inner terminal plate 131 may be coupled to the first terminal connection portion 122 of the first current collector 120. The first inner terminal plate 131 may include a terminal hole 131a penetrating between a first side and a second side. The terminal hole 131a may be sized to correspond to the diameter of the first terminal pillar 132. In an embodiment, the terminal hole 131a may be located approximately at the center of the first inner terminal plate 131. In an embodiment, the first inner terminal plate 131 may include coupling protrusions 131b so as to be symmetrical with each other on both, or opposite, sides in the first direction (x) with respect to the terminal hole 131a. The coupling protrusion 131b may be provided on the left inner side of the first inner terminal plate 131. The coupling protrusion 131b may protrude in the second direction (y) in which the electrode assembly 110 is located. The coupling protrusion 131b is a circular ring-shaped protrusion having an empty, or open, interior and may be easily deformable. The coupling protrusion 131b may be riveted in a state of being inserted into the coupling hole 122a of the first terminal connection portion 122. The coupling protrusion 131b inserted into the coupling hole 122a may protrude beyond the inner surface of the first inner terminal plate 131. For example, the end of the coupling protrusion 131b, which protrudes compared to the inside of the first inner terminal plate 131, is pressed by a riveting tool and spreads outward, causing the first inner terminal plate 131 to spread outward. Accordingly, the first inner terminal plate 131 and the first terminal connection portion 122 may be fastened with each other. That is, the first inner terminal plate 131 may be coupled to the first terminal connection portion 122 by riveting. Referring to FIG. 5C, an outer diameter B of the end of the coupling protrusion 131b may be larger than an outer diameter A of the coupling protrusion 131b in other regions.

In one or more embodiments, the first inner terminal plate 131 and the first terminal connection portion 122 are coupled to each other by riveting, such that foreign substances or damage to the insulating member, which may occur during welding, may be prevented or substantially prevented.

The first terminal pillar 132 may be inserted and coupled to the terminal hole 131a of the first inner terminal plate 131. For example, the first terminal pillar 132 may be inserted into the terminal hole of the first inner terminal plate 131 and fixed at a side by riveting or/and welding. The first terminal connection portion 122 of the first current collector 120 may be coupled to a surface of the first inner terminal plate 131 coupled to the first terminal pillar 132 by riveting.

The first terminal pillar 132 may have a pillar shape and penetrate the first cap plate 171. The first terminal pillar 132 may have a flange formed on the outside of the first cap plate 171 to prevent or substantially prevent the first terminal pillar 132 from falling off from the first cap plate 171. The first terminal pillar 132 may be inserted and coupled to the terminal hole of the first outer terminal plate 133 from the outside and may be inserted and coupled to the terminal hole of the first inner terminal plate 131 from the inside, with respect to the first cap plate 171.

The first outer terminal plate 133 may have a terminal hole penetrating between a first side and a second side. In an embodiment, the terminal hole may be located approximately at a center of the first outer terminal plate 133.

The first terminal pillar 132 may be inserted and coupled to the terminal hole of the first outer terminal plate 133. For example, the first terminal pillar 132 may be fixed by riveting or/and welding in a state of being inserted into the terminal hole of the first outer terminal plate 133 on the outside of the first cap plate 171. In an embodiment, the outer insulation member 174 made of an insulating material may be further interposed between a surface of the first outer terminal plate 133 and the first cap plate 171 for insulation.

In an embodiment, the first inner terminal plate 131, the first terminal pillar 132, and the first outer terminal plate 133, which correspond to the first terminal 130, may be made of copper or a copper alloy. In the first terminal 130, portions of the first outer terminal plate 133 and the first terminal pillar 132 may be exposed and protrude from the outside of the first cap plate 171. In addition, in the first terminal 130, a portion of the first terminal pillar 132 and the first inner terminal plate 131 may be located inside the case 160, which is inside the first cap plate 171. In addition, the first terminal 130 may be in contact with and coupled to the first current collector 120 inside the case 160.

The second current collector 140 is made of metal and may electrically connect the second electrode plate 112 to the second terminal 150. The second current collector 140 is a metal plate, and may include a second electrode connection portion 141 that is in contact with and coupled to the second electrode tab of the second electrode plate 112, and a second terminal connection portion 142 that is in contact with and coupled to the second terminal 150 by riveting. The second terminal connection portion 142 may include a coupling hole penetrating between a first side and a second side, and may be coupled to the coupling protrusion of the second terminal connection portion 142. In an embodiment, the second current collector 140 may be coupled to the electrode assembly 110 and the second terminal 150 so as to be symmetrical with the first current collector 120 with respect to the electrode assembly 110. In an embodiment, the second current collector 140 may be made of aluminum or an aluminum alloy.

The second terminal 150 is made of metal and may be electrically connected to the second current collector 140. In some examples, the second terminal 150 may include a second inner terminal plate 151, a second terminal pillar 152, and a second outer terminal plate 153.

The second inner terminal plate 151 may be located at an inside of a second cap plate 181, and the second outer terminal plate 153 may be located at an outside of the second cap plate 181. In an embodiment, a second coupling member 182 may be further interposed between the second outer terminal plate 153 and the second cap plate 181. Additionally, a second seal gasket 183 may be further interposed between the second terminal pillar 152 and the second cap plate 181 and between the second inner terminal plate 151 and the second cap plate 181. In addition, the second terminal pillar 152 may penetrate the second cap plate 181, may be coupled to the second outer terminal plate 153 on the outside of the second cap plate 181, and may be coupled to the second inner terminal plate 151 on the inside of the second cap plate 181. In an embodiment, the second inner terminal plate 151 may include a coupling protrusion 151b, and may be inserted into the coupling hole of the second terminal connection portion 142 and coupled thereto by riveting.

In an embodiment, the second terminal 150 may have a same shape and structure as the first terminal 130. In an embodiment, the second terminal 150 may be coupled to the electrode assembly 110 through the second current collector 140 so as to be symmetrical to the first terminal 130 with respect to the electrode assembly 110. In an embodiment, the second terminal 150 may be made of aluminum or an aluminum alloy.

In an embodiment, the case 160 may have a hollow rectangular parallelepiped shape having openings on both, or opposite, sides thereof. The electrode assembly 110 coupled to the first current collector 120 and the second current collector 140 may be inserted into an interior of the case 160 through the openings.

In an embodiment, the case 160 may include rectangular upper and lower surfaces extending along the second direction (y), which is the longitudinal direction of the case, and two rectangular long side surfaces extending along the second direction (y) while connecting long sides of the upper and lower surfaces. In an embodiment, in the case 160, the upper surface, the lower surface, and the two side surfaces may be integrally formed.

The case 160 may include a vent hole penetrating the side surfaces. The case 160 may have a safety vent 163 installed in the vent hole. In an embodiment, the safety vent 163 may include a notch that is thinner than other regions to be opened at a set pressure.

The first cap assembly 170 may be coupled to a left opening 161 of the case 160. In an embodiment, the first cap assembly 170 may include the first cap plate 171, the first inner insulation member 172, the first seal gasket 173, the first outer insulation member 174, and a first insulation member 175.

In an embodiment, the first cap plate 171 may be shaped of a flat square plate and may seal the left opening of the case 160. The first cap plate 171 may include a terminal hole and an electrolyte injection port penetrating between the outer surface and the inner surface. The first terminal pillar 132 of the first terminal 130 may penetrate the terminal hole of the first cap plate 171 and be coupled to the first inner terminal plate 131 and the first outer terminal plate 133. In an embodiment, the electrolyte injection port may be sealed by a stopper 176 after the first cap plate 171 is coupled to the case 160 and the electrolyte solution is injected into the case 160.

The first inner insulation member 172 may be interposed between the inner surface of the first cap plate 171 and the first inner terminal plate 131. The first inner insulation member 172 may be in close contact with the inner surface of the first cap plate 171 and may also be in close contact with the first seal gasket 173. The first inner insulation member 172 may be made of an insulating material and may insulate the first cap plate 171 and the first inner terminal plate 131 from each other.

In addition, the first seal gasket 173 may be made of an insulating material and may be provided between the first cap plate 171 and the first terminal pillar 132 to seal the first cap plate 171 and the first terminal pillar 132 to each other. That is, the first seal gasket 173 may be interposed between the first cap plate 171 and the first terminal pillar 132. This first seal gasket 173 prevents or substantially prevents external moisture from penetrating into the interior of the secondary battery 100 and/or prevents or substantially prevents the electrolyte contained within the secondary battery 100 from leaking out. A first side of the first seal gasket 173 may be in contact with the first outer insulation member 174, and a second side may be in contact with the first inner insulation member 172.

In addition, the first outer insulation member 174 may be interposed between the outer surface of the first cap plate 171 and the first outer terminal plate 133. The first outer insulation member 174 may be in close contact with the first cap plate 171 and may also be in close contact with the first terminal pillar 132. The first inner insulation member 172 may be made of an insulating material and may insulate the first cap plate 171 and the first outer terminal plate 133 from each other.

That is, the first cap plate 171 may be electrically separated from the first terminal 130 by the first inner insulation member 172, the first seal gasket 173, and the first outer insulation member 174.

In an embodiment, the first insulation member 175 may be interposed between the first cap plate 171 and the electrode assembly 110. The first insulation member 175 may be made of an insulating material and may prevent or substantially prevent a side of the electrode assembly 110 from electrically contacting the first cap plate 171.

The second cap assembly 180 may be coupled to a right opening of the case 160. In some examples, the second cap assembly 180 may include the second cap plate 181, the second inner insulation member 182, the second seal gasket 183, a second outer insulation member 184, and a second insulation member 185. In an embodiment, the second cap assembly 180 may be the same or substantially the same as the first cap assembly 170 in terms of shape and structure. In addition, the second cap assembly 180 and the second terminal 150 may be the same or substantially the same as the first cap assembly 170 and the first terminal 130 in terms of coupling shape and structure. In an embodiment, the coupling shape of the second cap assembly 180 and the second terminal 150 may be symmetrical to the coupling shape of the first cap assembly 170 and the first terminal 130 with respect to the case 160.

In the secondary battery 100, the first cap assembly 170 coupled to the first terminal 130 is coupled to a first opening of the case 160, and the second cap assembly 180 coupled to the second terminal 150 is coupled to a second opening of the case 160, such that the first terminal 130 and the second terminal 150 are located at both, or opposite, sides of the case 160. The secondary battery 100 includes the first terminal 130 and the second terminal 150 provided at both, or opposite, sides, respectively, and, thus, when a plurality of secondary batteries 100 are combined in a module form, cooling members (not shown) can be coupled to the upper and lower regions of the case 160, respectively, thereby reducing deterioration of the secondary batteries 100 and improving cooling performance.

For example, in the secondary battery 100, the side surface having a safety vent may become a bottom surface, and the upper and lower surfaces may become long side surfaces. The battery module may electrically connect first terminals and/or second terminals exposed at both, or opposite, sides, respectively, in a state in which the long side surfaces of the plurality of secondary batteries 100 face each other.

In addition, the secondary battery 100 includes the first terminal 130 and the second terminal 150 on both sides, respectively, and, thus, when a plurality of secondary batteries 100 are combined in a module form, charge/discharge current flows through the respective terminals in both directions, such that two terminals are provided at a side, thereby reducing deterioration. In addition, when a plurality of secondary batteries 100 are combined in a module form, the respective terminals can be connected to each other in an opposite direction, thereby increasing space utilization.

As described above, in the secondary battery according to one or more embodiments of the present disclosure, a current collector and a terminal are coupled to each other by riveting, and the generation of foreign substances and damage due to welding can be prevented or substantially prevented.

In addition, the secondary battery according to one or more embodiments of the present disclosure includes a first terminal and a second terminal provided on both sides, and, thus, even when a plurality of secondary batteries are combined in a module form, cooling members can be coupled to the upper and lower regions of a case, respectively, thereby reducing deterioration of the secondary batteries and improving cooling performance.

In addition, the secondary battery according to one or more embodiments of the present disclosure includes a first terminal and a second terminal on both sides, and, thus, when a plurality of secondary batteries are combined in a module form, charge/discharge current flows along the respective terminals in both directions, thereby reducing the deterioration due to the charge/discharge current and improving space utilization.

While some embodiments for carrying out the present disclosure have been described herein, the present disclosure is not limited to these embodiments, and it will be understood by a person skilled in the art that various changes in form and details may be made therein without departing from the scope of the present disclosure as set forth by the following claims.

## Claims

1. A secondary battery (100) comprising:
an electrode assembly (110) comprising a first electrode tab and a second electrode tab exposed at opposite sides, respectively;
a case (160) accommodating the electrode assembly (110) and open on opposite sides;
a first cap plate (171) that seals a first side opening of the case (160);
a first current collector (120) that is in contact with and coupled to the first electrode tab exposed at a first side of the electrode assembly (110), the first current collector (120) comprising a coupling hole (122a); and
a first terminal (130) comprising a coupling protrusion (131b, 151b) inserted and coupled to the coupling hole (122a) of the first current collector (120), the first terminal (130) comprising a portion exposed to an outside of the first cap plate (171),
wherein an outer diameter (B) of an end of the coupling protrusion (131b, 151b) is larger than outer diameters (A) of other regions thereof.

2. The secondary battery (100) as claimed in claim 1, wherein the first current collector (120) comprises:
a first electrode connection portion (121) that is in contact with and coupled to the first electrode tab exposed at the first side of the electrode assembly (110); and
a first terminal connection portion (122) comprising a first end coupled to the first electrode connection portion (121) by welding, and the coupling hole (122a) at a second end to be coupled to the coupling protrusion (131b, 151b) of the first terminal (130).

3. The secondary battery (100) as claimed in claim 2, wherein the first terminal connection portion (122) is bent at least once between a first end and a second end thereof and is located between the first electrode tab and the first terminal (130) of the electrode assembly (110).

4. The secondary battery (100) as claimed in claim 2 or 3, wherein the first electrode connection portion (121) comprises a metal plate extending along a first direction (x), and comprises a first connection portion (121a) welded in contact with the first side of the electrode assembly (110), and a first center portion (121b) that is bent from the first connection portion (121a), protrudes in a direction of the first cap plate (171) relative to the first connection portion (121a), and is spaced apart from the first side of the electrode assembly (110).

5. The secondary battery (100) as claimed in claim 4, wherein the first connection portion (121a) is located on opposite sides of the first center portion (121b) in the first direction (x).

6. The secondary battery (100) as claimed in any one of the preceding claims, wherein the coupling protrusion (131b, 151b) of the first terminal (130) is inserted into the coupling hole (122a) of the first current collector (120), and an end of the coupling protrusion (131b, 151b) is spread by riveting and coupled to the first current collector (120).

7. The secondary battery (100) as claimed in any one of the preceding claims, wherein the first terminal (130) comprises:
a first inner terminal plate (131) located inside the first cap plate (171);
a first outer terminal plate (133) located outside the first cap plate (171); and
a first terminal pillar (132) coupled to the first inner terminal plate (131) at an inside of the first cap plate (171), penetrating the first cap plate (171), and coupled to the first outer terminal plate (133) and an outside of the first cap plate (171).

8. The secondary battery (100) as claimed in claim 7, wherein the first inner terminal plate (131) comprises the coupling protrusion (131b, 151b) on an inside thereof.

9. The secondary battery (100) as claimed in claim 7 or 8, wherein the coupling protrusion (131b, 151b) protrudes in a second direction (y), which is a direction in which the electrode assembly (110) extends.

10. The secondary battery (100) as claimed in any one of claims 7 to 9, wherein the first terminal (130) plate comprises a terminal hole (131a) penetrating a first side and a second side thereof at a center thereof, and the coupling protrusion (131b, 151b) is located on opposite sides of the terminal hole (131a) in the first direction (x).

11. The secondary battery (100) as claimed in any one of claims 7 to 10, wherein the coupling hole (122a) is at a location corresponding to the coupling protrusion (131b, 151b) and has a size corresponding to a diameter of the coupling protrusion (131b, 151b).

12. The secondary battery (100) as claimed in any one of claims 7 to 11, further comprising:
a first inner insulation member (172) between the first cap plate (171) and the first inner terminal plate (131);
a first outer insulation member (174) between the first cap plate (171) and the first outer terminal plate (133); and
a first seal gasket (173) between the first cap plate (171) and the first terminal pillar (132).

13. The secondary battery (100) as claimed in any one of the preceding claims, further comprising:
a second cap plate (181) that seals a second side opening of the case (160);
a second current collector (140) that is in contact with and coupled to a second electrode tab exposed on a second side of the electrode assembly (110) and comprises a coupling hole (122a); and
a second terminal (150) comprising a coupling protrusion (131b, 151b) inserted and riveted to the coupling hole (122a) of the second current collector (140), and a portion exposed to an outside of the second cap plate (181).

14. The secondary battery (100) as claimed in any one of the preceding claims, wherein the coupling protrusion (131b, 151b) comprises a circular ring-shaped protrusion with a hollow interior.

15. The secondary battery (100) as claimed in any one of the preceding claims, further comprising a first insulation member (175) between the first cap plate (171) and the electrode assembly (110) to block electrical contact.
